# EUROPEAN PATENT APPLICATION

(11) **EP 4 561 040 A1**
(43) Date of publication of application: **28.05.2025**
(21) Application number: 23890305.8
(22) Date of filing: 15.08.2023
(51) Int. Cl.: H04M 1/72454, H05B 47/10

(54) **DEVICE CONTROL METHOD, DEVICE, AND STORAGE MEDIUM**

(30) Priority: 18.11.2022 CN 202211451120
(71) Applicant: Honor Device Co., Ltd., Shenzhen, Guangdong 518040 (CN)
(72) Inventor: ZHANG, Guoyue, Shenzhen, Guangdong 518040 (CN)
(74) Representative: Gill Jennings & Every LLP
(86) International application number: PCT/CN2023/113148
(87) International publication number: WO 2024/103866

(57) **Abstract**

This application discloses a device control method, a device, and a storage medium, and belongs to the field of electronic technologies. The method includes: displaying, by the electronic device in response to an electronic device in an unlocked state entering a fence of a lighting device from outside the fence, or in response to an electronic device located within a fence of a lighting device changing from a screen-locked state to an unlocked state an application interface of a specified application, and obtaining a current state of the lighting device; and when the lighting device is turned on and is in a first lighting mode, controlling, by the electronic device, the lighting device to be switched from the first lighting mode to a second lighting mode.

## Description

This application claims priority to Chinese Patent Application No. 202211451120.4, filed with the China National Intellectual Property Administration on November 18, 2022 and entitled "DEVICE CONTROL METHOD, DEVICE, AND STORAGE MEDIUM", which is incorporated herein by reference in its entirety.

### TECHNICAL FIELD

This application relates to the field of electronic technologies, and in particular, to a device control method, a device, and a storage medium.

### BACKGROUND

With development of electronic technologies, electronic devices such as mobile phones, tablet computers, and notebook computers have become an indispensable part of people's daily lives. Currently, a user can perform content browsing by using an electronic device. For example, with popularization of network education, a student can take an online class, browse course content, and learn related knowledge by using an electronic device. Frequency and duration of use of electronic devices by people are continuously increasing. However, viewing a screen of an electronic device for a long time may cause eyes to feel tired and uncomfortable, and may affect vision over a long time.

### SUMMARY

This application provides a device control method, a device, and a storage medium, to effectively protect eyes and improve screen content browsing experience. Technical solutions are as follows.

According to a first aspect, a device control method is provided. In the method, the electronic device displays, in response to an electronic device in an unlocked state entering a fence of a lighting device from outside the fence, or in response to an electronic device located within a fence of a lighting device changing from a screen-locked state to an unlocked state an application interface of a specified application, and obtains a current state of the lighting device. When the lighting device is turned on and is in a first lighting mode, the electronic device controls the lighting device to be switched from the first lighting mode to a second lighting mode matching the specified application.

The specified application may be used for performing content browsing. For example, the specified application may be an application used for browsing text content or video content. For example, the specified application may be an application used for learning. Certainly, the specified application may alternatively be another application that can perform content browsing. This is not uniquely limited in this application.

The first lighting mode is different from the second lighting mode. In some embodiments, a difference between the first lighting mode and the second lighting mode is that the first lighting mode and the second lighting mode have different lighting brightness distributions. In other words, a brightness distribution of a lighting region of the lighting device in the first lighting mode is different from a brightness distribution of a lighting region of the lighting device in the second lighting mode.

For example, the first lighting mode is a lighting mode suitable for viewing an object, such as a book, on which diffuse reflection may occur. In this case, optionally, in the first lighting mode, brightness of the lighting region of the lighting device is consistent, in other words, the brightness distribution of the lighting region of the lighting device is uniform.

For example, the second lighting mode is a lighting mode suitable for viewing an object, such as a screen of a device, on which specular reflection may occur. In this application, the second lighting mode is a lighting mode suitable for browsing screen content of the electronic device. That the second lighting mode matches the specified application indicates that the second lighting mode is a lighting mode suitable for using when content in the specified application in the electronic device is browsed. In this case, optionally, in the second lighting mode, brightness at a center position of the lighting region of the lighting device is lower than brightness at another position. In this way, in the second lighting mode, center brightness is reduced and surrounding light is replenished, to help reduce screen reflection of the electronic device and ensure balanced light and eye protection. Certainly, in the second lighting mode, the lighting region of the lighting device may alternatively be in another form of brightness distribution, as long as it is ensured that the second lighting mode is suitable for browsing the screen content of the electronic device.

The "fence" in this application is a region fence, and is a virtual boundary enclosed by a virtual fence. The virtual boundary defines a specific region. The "fence" described in this application refers to the fence of the lighting device. The fence of the lighting device is configured for defining a region around the lighting device. For example, the region defined by the fence of the lighting device may be a circular region with the lighting device as a center and a preset distance as a radius. Alternatively, the region defined by the fence of the lighting device may be a rectangular region with the lighting device as a center and a specific size as a length and a width. Certainly, the region defined by the fence of the lighting device may alternatively be a region of another shape as long as the region is the region around the lighting device.

If the electronic device in the unlocked state enters the fence of the lighting device from outside the fence, it indicates that when the electronic device is in the unlocked state, the electronic device gradually approaches the lighting device until the electronic device is located near the lighting device. In this case, a user may perform content browsing by using the specified application in the electronic device under lighting of the lighting device. Therefore, the electronic device may automatically display the application interface of the specified application.

If the electronic device located within the fence of the lighting device changes from the screen-locked state to the unlocked state, it indicates that when the electronic device is located near the lighting device, a screen of the electronic device is unlocked. In this case, the user may perform content browsing by using the specified application in the electronic device under lighting of the lighting device. Therefore, the electronic device may automatically display the application interface of the specified application.

In this application, when the electronic device is located near the lighting device, the application interface of the specified application in the electronic device may be automatically displayed, so that the user is not interfered by another application. In addition, when the specified application is run and the lighting device is turned on, the lighting device may be automatically controlled to be in the second lighting mode, to reduce the screen reflection of the electronic device and balance light, so as to effectively protect eyes and improve screen content browsing experience.

Optionally, an operation in which the electronic device displays the application interface of the specified application may be as follows. If the specified application is not started, the electronic device starts the specified application to display the application interface of the specified application.

In this case, the electronic device does not start the specified application before being located near the lighting device. For example, when the user does not open the specified application in the electronic device, the user approaches the lighting device with the electronic device, and moves until the electronic device is located near the lighting device. When the electronic device is located near the lighting device, the specified application is automatically started to display the application interface of the specified application. In this case, the specified application is in a running state. This helps the user quickly perform content browsing by using the specified application, and improves user experience.

Optionally, the operation in which the electronic device displays the application interface of the specified application may be as follows. If the specified application is already started and the specified application is in a background running state, the electronic device switches the specified application to be in a foreground running state, to display the application interface of the specified application.

In this case, the electronic device already starts the specified application before being located near the lighting device. For example, after opening the specified application in the electronic device, the user switches the specified application to be run in the background. Then, the user approaches the lighting device with the electronic device, and moves until the electronic device is located near the lighting device. When the electronic device is located near the lighting device, the specified application is in the background running state. The electronic device may automatically switch the specified application to be in the foreground running state, to display the application interface of the specified application. This helps the user quickly perform content browsing by using the specified application, and improves the user experience.

Further, after obtaining the current state of the lighting device, the electronic device may further perform the following operations. When the lighting device is turned off, the electronic device detects ambient light brightness. If the detected ambient light brightness is less than or equal to preset brightness, the electronic device controls the lighting device to be turned on and controls the lighting device to be in the second lighting mode.

In this application, when the lighting device is turned off, the electronic device may detect the ambient light brightness, to determine whether currently there is a requirement for lighting by using the lighting device. If the ambient light brightness is less than or equal to the preset brightness, it indicates that the ambient light brightness is low, in other words, it indicates that the lighting device currently needs to be used for lighting. In this case, the electronic device may automatically control the lighting device to be turned on and control the lighting device to be in the second lighting mode. In this way, when needed light is replenished, the screen reflection of the electronic device can be reduced, and light can be balanced, to effectively protect eyes and improve the screen content browsing experience.

Optionally, the electronic device detects the ambient light brightness in a process of running the specified application. If the detected ambient light brightness is less than or equal to the preset brightness, when determining that the electronic device is not located within the fence of the lighting device, the electronic device displays reminder information. The reminder information is used for reminding to move to the lighting device.

In this application, when the user performs content browsing by using the specified application in the electronic device and when an environment becomes dark, the user may be reminded in a timely manner to move to the lighting device for browsing, to protect vision and improve browsing experience.

Optionally, the electronic device receives a broadcast message. The broadcast message carries a lighting device identifier. In this case, if the electronic device changes from the screen-locked state to the unlocked state, the electronic device detects whether the electronic device is located within a fence of a lighting device identified by a lighting device identifier in a latest received broadcast message. If the electronic device is located within the fence of the lighting device identified by the lighting device identifier in the latest received broadcast message, the electronic device displays the application interface of the specified application, and obtains the current state of the lighting device.

In this application, if the electronic device changes from the screen-locked state to the unlocked state, it indicates that the user is to start to use the electronic device. Therefore, in this case, the electronic device may determine, based on the latest received broadcast message, whether the electronic device is located within the fence of the lighting device, to perform corresponding processing procedures based on this, such as displaying the application interface of the specified application and controlling the lighting device.

Optionally, if the electronic device changes from a mobile state to a stationary state, the electronic device detects whether the electronic device is located within the fence of the lighting device identified by the lighting device identifier in the latest received broadcast message.

In this application, when the electronic device is in the mobile state, a distance between the electronic device and the lighting device changes constantly, and in this case, the user may not use the electronic device. Therefore, in this case, the electronic device may not detect whether the electronic device is located within the fence of the lighting device. In this way, a processing resource can be reduced. When the electronic device changes from the mobile state to the stationary state, there is a large probability that the distance between the electronic device and the lighting device is already stable, and in this case, the user may also start to use the electronic device. Therefore, in this case, the electronic device may determine whether the electronic device is located within the fence of the lighting device, to perform a subsequent control operation based on this. During the stationary state of the electronic device, the distance between the electronic device and the lighting device is usually fixed. Therefore, in this case, the electronic device does not need to detect whether the electronic device is located within the fence of the lighting device. In this way, the processing resource can be reduced.

According to a second aspect, a device control apparatus is provided. The device control apparatus has a function of implementing a behavior of the device control method according to the foregoing first aspect. The device control apparatus includes at least one module, and the at least one module is configured to implement the device control method according to the foregoing first aspect.

According to a third aspect, a device control apparatus is provided. A structure of the device control apparatus includes a processor and a memory. The memory is configured to: store a program for supporting the device control apparatus in performing the device control method according to the foregoing first aspect, and store data used to implement the device control method according to the foregoing first aspect. The processor is configured to execute the program stored in the memory. The device control apparatus may further include a communication bus, and the communication bus is configured to establish a connection between the processor and the memory.

According to a fourth aspect, a computer-readable storage medium is provided. The computer-readable storage medium stores instructions. When the instructions are run on a computer, the computer is enabled to perform the device control method according to the foregoing first aspect.

According to a fifth aspect, a computer program product that includes instructions is provided. When the instructions are run on a computer, the computer is enabled to perform the device control method according to the foregoing first aspect.

Technical effects obtained through the foregoing second aspect, third aspect, fourth aspect, and fifth aspect are similar to the technical effect obtained through the corresponding technical means in the foregoing first aspect. Details are not described herein again.

### BRIEF DESCRIPTION OF DRAWINGS

FIG. 1 is a schematic diagram of a structure of an electronic device according to an embodiment of the application;
FIG. 2 is a block diagram of a software system of an electronic device according to an embodiment of this application;
FIG. 3 is a schematic diagram of a device control system according to an embodiment of this application;
FIG. 4 is a schematic diagram of a lighting mode of a table light according to an embodiment of this application;
FIG. 5 is a schematic flowchart of a device control method according to an embodiment of this application;
FIG. 6 is a schematic diagram of a fence according to an embodiment of this application;
FIG. 7 is a block diagram of a software system of a tablet computer and a table light according to an embodiment of this application;
FIG. 8 is a schematic diagram of a control interface of a table light plug-in according to an embodiment of this application;
FIG. 9 is a schematic diagram of a process of registering a device fence service according to an embodiment of this application;
FIG. 10 is a flowchart of another device control method according to an embodiment of this application;
FIG. 11 is a schematic diagram of a first type of reminder message according to an embodiment of this application;
FIG. 12 is a schematic diagram of a second type of reminder message according to an embodiment of this application;
FIG. 13 is a schematic diagram of a third type of reminder message according to an embodiment of this application;
FIG. 14 is a flowchart of another device control method according to an embodiment of this application;
FIG. 15 is a flowchart of another device control method according to an embodiment of this application;
FIG. 16 is a schematic diagram of a fourth type of reminder message according to an embodiment of this application;
FIG. 17 is a schematic diagram of a fifth type of reminder message according to an embodiment of this application; and
FIG. 18 is a schematic diagram of a structure of a device control apparatus according to an embodiment of this application.

### DESCRIPTION OF EMBODIMENTS

To make objectives, technical solutions, and advantages of this application clearer, the following further describes implementations of this application in detail with reference to the accompanying drawings.

It should be understood that "a plurality of" mentioned in this application means two or more. In descriptions of this application, unless otherwise specified, "/" means "or", for example, A/B may represent A or B. "And/or" used herein describes only an association relationship for describing associated objects and represents that three relationships may exist. For example, A and/or B may represent the following three cases: Only A exists, both A and B exist, and only B exists. In addition, for ease of describing the technical solutions in this application clearly, terms such as "first" and "second" are used to distinguish same or similar items with basically same functions and roles. A person skilled in the art may understand that the terms "first", "second", and the like, and do not limit a quantity and an execution order, and the terms "first", "second", and the like are not limited to be necessarily different.

Statements such as "one embodiment" or "some embodiments" described in this application mean that a specific characteristic, structure or feature described in this embodiment is included in one or more embodiments of this application. Therefore, statements "in one embodiment", "in some embodiments", "in some other embodiments", "in other embodiments", and the like in different places in this application do not necessarily refer to the same embodiment, but mean that "one or more but not all embodiments", unless otherwise specially emphasized in other ways. In addition, the terms "include", "comprise", "have" and their variations mean "including but not limited to", unless otherwise specially emphasized in other ways.

The following describes an electronic device in embodiments of this application.

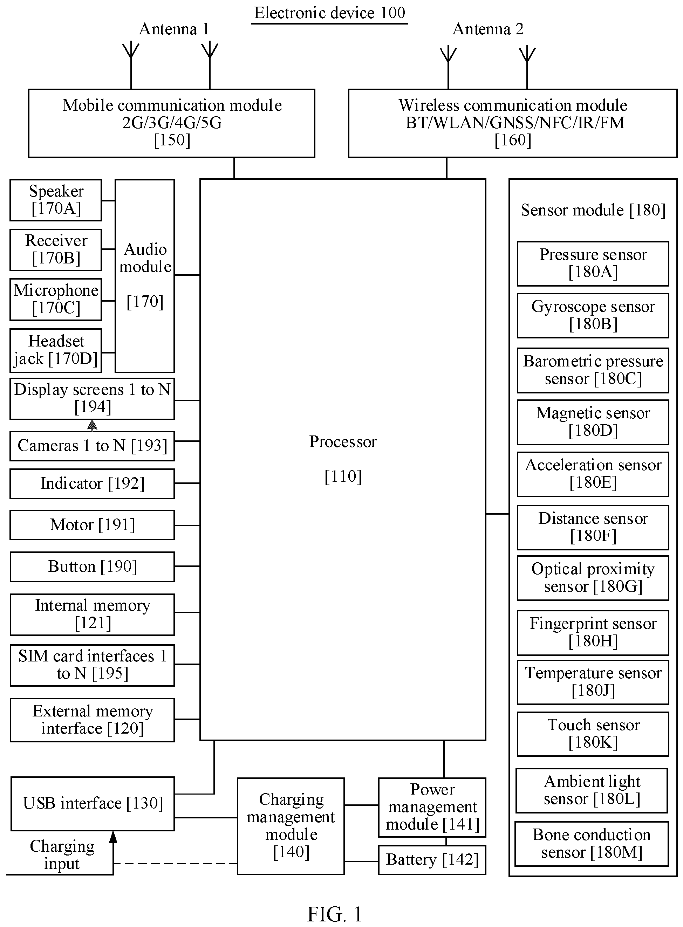

FIG. 1 is a schematic diagram of a structure of an electronic device according to an embodiment of the application. Refer to FIG. 1. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a telephone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in embodiments of this application constitutes no specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination thereof.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operating control signal based on instruction operation code and a time-sequence signal, to complete control of instruction fetch and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or data again, the processor 110 may directly invoke the instructions or data from the memory, to avoid repeated access, and reduce waiting time of the processor 110. Therefore, system efficiency is improved.

The charging management module 140 is configured to receive a charging input from a charger. The charger may be a wireless charger, or may be a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device 100 by using the power management module 141.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display screen 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave by using the antenna 1 for radiation. In some embodiments, at least some of functional modules of the mobile communication module 150 may be disposed in the processor 110. In some embodiments, the at least some of the functional modules of the mobile communication module 150 may be disposed in a same device as at least some of modules of the processor 110.

The wireless communication module 160 may provide a solution for wireless communication solution including a wireless local area network (wireless local area networks, WLAN) (for example, a wireless fidelity (wireless fidelity, Wi-Fi) network), Bluetooth (bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the electronic device 100. The wireless communication module 160 may be one or more devices that integrate at least one communication processing module. The wireless communication module 160 receives an electromagnetic wave by using the antenna 2, performs frequency modulation and filtering on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation by using the antenna 2.

The electronic device 100 implements a display function by using the GPU, the display screen 194, the application processor, and the like. The GPU is a microprocessor for image processing and connects the display 194 and the application processor. The GPU is configured to: perform mathematical and geometric calculations and perform graphics rendering. The processor 110 may include one or more GPUs that execute program instructions to generate or change display information.

The electronic device 100 may implement a photographing function by using the ISP, the camera 193, the video codec, the GPU, the display screen 194, the application processor, and the like.

The external memory interface 120 may be configured to connect to an external storage card such as a Micro SD card, to expand a storage capability of the electronic device 100. The external storage card communicates with the processor 110 through the external memory interface 120, to implement a data storage function, for example, storing a file such as a music or a video in the external storage card.

The internal memory 121 may be configured to store computer-executable program code, and the computer-executable program code includes instructions. The processor 110 performs various functional applications and data processing of the electronic device 100 by running the instructions stored in the internal memory 121. The internal memory 121 may include a program storage area and a data storage area. The program storage area may store an operating system, an application required by at least one function (such as a voice playing function and an image playing function), and the like. The data storage area may store data (such as audio data and a phone book), and the like created when the electronic device 100 is used. In addition, the internal memory 121 may include a high-speed random access memory, and may also include a non-volatile memory, for example, at least one magnetic disk storage device, a flash storage device, or a universal flash storage (universal flash storage, UFS).

The electronic device 100 may implement an audio function such as music playing or recording by using the audio module 170, the speaker 170A, the telephone receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may further be configured to: encode and decode an audio signal. In some embodiments, the audio module 170 may be disposed in the processor 110, or some functional modules of the audio module 170 may be disposed in the processor 110.

The SIM card interface 195 is configured to connect to a SIM card. The SIM card may be inserted into the SIM card interface 195 or unplugged from the SIM card interface 195, to come into contact with or be separated from the electronic device 100. The electronic device 100 may support one or N SIM card interfaces, where N is an integer greater than 1. The SIM card interface 195 can support a Nano SIM card, a Micro SIM card, a SIM card, and the like. A plurality of cards may be inserted into a same SIM card interface 195 at the same time. Types of the plurality of cards may be the same or different. The SIM card interface 195 may also be compatible with different types of SIM cards. The SIM card interface 195 may also be compatible with an external memory card. The electronic device 100 interacts with a network by using the SIM card, to implement functions such as call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 is described below.

The software system of the electronic device 100 may use a layered architecture, an event-driven architecture, a micro core architecture, a micro service architecture, or a cloud architecture. In this embodiment of this application, the software system of the electronic device 100 is described by using an Android (Android) system with the layered architecture as an example.

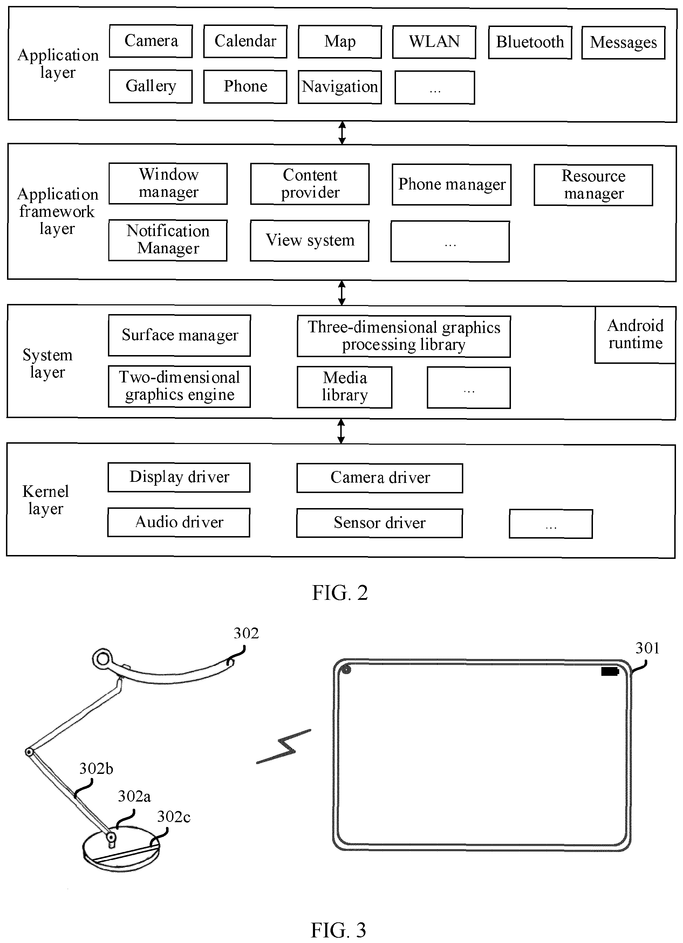

FIG. 2 is a block diagram of a software system of an electronic device 100 according to an embodiment of this application. Refer to FIG. 2. In a layered architecture, software is divided into several layers, and each layer has a clear role and task. Communication between layers is performed through a software interface. In some embodiments, an Android system includes an application layer, an application framework layer, an Android runtime (Android runtime) and system layer, and a kernel layer.

The application layer may include a series of applications. As shown in FIG. 2, the applications may include applications such as Camera, Gallery, Calendar, Phone, Map, Navigation, WLAN, Bluetooth, and Messages.

The application framework layer provides an application programming interface (application programming interface, API) and a programming framework for an application at the application layer. The application framework layer includes some pre-defined functions. As shown in FIG. 2, the application framework layer may include a window manager, a content provider, a view system, a phone manager, a resource manager, a notification manager, and the like. The window manager is configured to manage a window program. The window manager may obtain a size of a display screen, determine whether there is a status bar, lock the screen, capture the screen, and the like. The content provider is configured to: store and obtain data and make the data accessible to an application. The data may include a video, an image, audio, calls made and answered, a browsing history, a bookmark, a phonebook, and the like. The view system includes a visual control such as a control for text display or a control for picture display. The view system may be configured to construct a display interface of an application. The display interface may include one or more views, for example, include a view for displaying a short message notification icon, include a view for text display, and include a view for picture display. The phone manager is configured to provide a communication function of the electronic device 100, such as management of a call state (including answering and hanging up). The resource manager provides various resources, for example, a localized character string, an icon, a picture, a layout file, and a video file, for an application. The notification manager enables an application to display notification information in a status bar that may be used to convey a message of a notification type, where the message may disappear automatically after a short stay without user interaction. For example, the notification manager is configured to notify download completion, a message notification, and the like. The notification manager may alternatively be a notification that appears on a top status bar of the system in a form of a graph or a scroll bar text, for example, a notification of an application running in the background. The notification manager may alternatively be a notification that appears on a screen in a form of a dialog window. For example, text information is prompted on the status bar, a prompt tone is made, the electronic device vibrates, or an indicator light flashes.

The Android runtime includes a core library and a virtual machine. The Android runtime is responsible for scheduling and managing the Android system. The core library includes two parts. One part is a function that a Java language needs to invoke, and the other part is a core library of Android. The application layer and the application framework layer are run in the virtual machine The virtual machine executes Java files of the application layer and the application framework layer as binary files. The virtual machine is used to execute functions such as object lifecycle management, stack management, thread management, security and exception management, and garbage collection.

A system library may include a plurality of functional modules, for example, a surface manager (surface manager), a media library (Media Library), a three-dimensional graphics processing library (for example, OpenGL ES), and a two-dimensional graphics engine (for example, SGL). The surface manager is configured to: manage a display subsystem, and provide fusion of two-dimensional and three-dimensional layers for a plurality of applications. The media library supports playback and recording in a plurality of commonly used audio and video formats, and also support static image files, and the like. The media library may support a plurality of audio and video encoding formats such as MPEG4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer is a layer between hardware and software. The kernel layer includes a display driver, a camera driver, an audio driver, a sensor driver and the like.

The following describes an application scenario provided in this embodiment of this application.

With development of electronic technologies, electronic devices such as mobile phones, tablet computers, and notebook computers have become an indispensable part of people's daily lives. A user can perform content browsing by using an electronic device. For example, with popularization of network education, a student can take an online class, browse course content, and learn related knowledge by using an electronic device. Frequency and duration of use of electronic devices by people are continuously increasing. However, viewing a screen of an electronic device for a long time may cause eyes to feel tired and uncomfortable, and may affect vision over a long time. There is a growing concern about damage that screens can do to eyes of children, especially for children in growing stages.

Currently, when ambient light is low, a user usually turns on a table light when using an electronic device. However, when light of the table light strikes a screen of the electronic device, as a mirror surface, the screen reflects the light of the table light, so that "dazzle" light reflection is generated on the screen. In this case, local light of the screen is excessively bright, causing eye discomfort. Therefore, how the user protects eyes when browsing screen content of the electronic device under the table light is a major concern.

The following describes a system architecture in embodiments of this application.

FIG. 3 is a schematic diagram of a device control system according to an embodiment of this application. Refer to FIG. 3. The device control system includes: an electronic device 301 and a lighting device 302. The electronic device 301 and the lighting device 302 may communicate through a wireless or wired connection.

The electronic device 301 may be a device having a screen. For example, the electronic device 301 may be a mobile phone or a tablet computer. This is not uniquely limited in this embodiment of this application. A specified application (application, APP) may be installed in the electronic device 301, and the specified application may be used for performing content browsing. For example, the specified application may be an application used for browsing text content or video content. For example, the specified application may be an application used for learning. Certainly, the specified application may alternatively be another application that can perform content browsing. This is not uniquely limited in this embodiment of this application.

The lighting device 302 is a device configured for lighting. For example, the lighting device 302 may be a table light or a floor light. This is not uniquely limited in this embodiment of this application. In this embodiment of this application, there may be a plurality of lighting modes of the lighting device 302. Optionally, the lighting modes of the lighting device 302 may include a first lighting mode and a second lighting mode.

The following describes the first lighting mode and the second lighting mode.

The first lighting mode is different from the second lighting mode. In some embodiments, a difference between the first lighting mode and the second lighting mode is that the first lighting mode and the second lighting mode have different lighting brightness distributions. In other words, a brightness distribution of a lighting region of the lighting device 302 in the first lighting mode is different from a brightness distribution of a lighting region of the lighting device 302 in the second lighting mode.

For example, the first lighting mode is a lighting mode suitable for viewing an object, such as a book, on which diffuse reflection may occur. In this case, optionally, in the first lighting mode, brightness of the lighting region of the lighting device 302 is consistent, in other words, the brightness distribution of the lighting region of the lighting device 302 is uniform.

For example, the second lighting mode is a lighting mode suitable for viewing an object, such as a screen of a device, on which specular reflection may occur. In this embodiment of this application, the second lighting mode is a lighting mode suitable for browsing screen content of the electronic device 301. Optionally, the second lighting mode is a lighting mode matching the specified application. To be specific, the second lighting mode is a lighting mode suitable for using when browsing content in the specified application in the electronic device 301. In this case, optionally, in the second lighting mode, brightness at a center position of the lighting region of the lighting device 302 is lower than brightness at another position. In this way, in the second lighting mode, center brightness is reduced and surrounding light is replenished, to help reduce screen reflection of the electronic device 301 and ensure balanced light and eye protection. Certainly, in the second lighting mode, the lighting region of the lighting device 302 may alternatively be in another form of brightness distribution, as long as it is ensured that the second lighting mode is suitable for browsing the screen content of the electronic device 301.

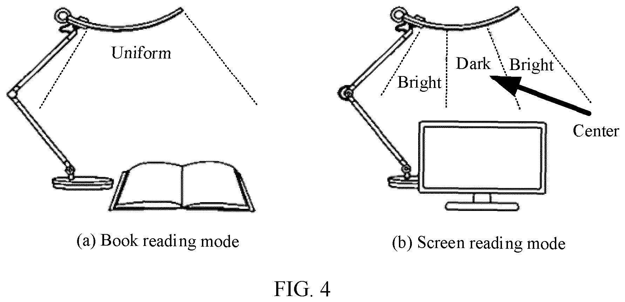

For example, as shown in FIG. 4, the table light provided in this embodiment of this application may have two lighting modes. One lighting mode (namely, the first lighting mode) is a book reading mode, and is suitable for reading a book under the table light. As shown in (a) in FIG. 4, in this lighting mode, a light distribution of the table light is uniform, and brightness is consistent, so that light needed for reading can be provided. Another lighting mode (namely, the second lighting mode) is a screen reading mode, and is suitable for browsing screen content of a device under the table light. As shown in (b) in FIG. 4, in this lighting mode, light brightness at a center position of a lighting region of the table light is low, and light brightness at positions on two sides is high, so that screen reflection can be reduced, needed light is replenished on the two sides, and contrast glare is reduced. In this way, the light is balanced, and eyes can be protected.

However, when performing content browsing by using the electronic device 301, a user usually forgets to turn on the lighting device 302 when the environment is dark, or even if the lighting device 302 is turned on, a user may forget to adjust the lighting device 302 to be in the second lighting mode. In addition, since there are usually many applications on the electronic device 301, how to quickly enter the specified application for performing content browsing is also a problem.

For example, tablet computers are widely used in a network education scenario. In one aspect, excessive applications are installed in the tablet computer, which affects the user to enter a learning state as soon as possible. In another aspect, lights may not be turned on in a timely manner when the environment becomes dark, and use of the tablet computer in dim light may affect vision. Alternatively, when the tablet computer is used to learn under the table light, forgetting to adjust the table light to be in the screen reading mode also affects vision. In this case, how to quickly enable the user to enter the learning state and protect eyes is a key point to focus on.

Therefore, this embodiment of this application provides a device control method. When the electronic device 301 and the lighting device 302 (such as a table light or a floor light) are close, an application interface of a specified application (such as a specific application used for learning) in the electronic device 301 may be automatically displayed, so that the user is not interfered by another application. In addition, during running of the specified application, when the lighting device 302 is turned on (that is, the lights are turned on), the lighting device 302 may be automatically controlled to be in the second lighting mode, to reduce the screen reflection of the electronic device 301 and balance light, so as to effectively protect eyes and improve screen content browsing experience. During running of the specified application, when the lighting device 302 is turned off (that is, the lights are turned off), the lighting device 302 may be automatically controlled to be turned on and the lighting device 302 may be controlled to be in the second lighting mode when ambient light brightness is low. In this way, when needed light is replenished, the screen reflection of the electronic device 301 is reduced, so that light is balanced, to effectively protect the eyes and improve the screen content browsing experience.

Optionally, in this embodiment of this application, at least one of the electronic device 301 and the lighting device 302 is movable. For example, the electronic device 301 may be a portable device. The electronic device 301 may be carried and moved by a user, and the lighting device 302 may be fixed at one position. Alternatively, the electronic device 301 may be fixed at one position, and the lighting device 302 may be movable. For example, the lighting device 302 may be carried and moved by a user. Alternatively, the electronic device 301 may be a portable device. The electronic device 301 may be carried and moved by a user, and the lighting device 302 may also be movable. For example, the lighting device 302 may also be carried and moved by the user.

For example, when ambient light is low, a user may carry the electronic device 301 to move to the lighting device 302. Alternatively, a user may carry the lighting device 302 to move to the electronic device 301. Alternatively, one user may carry the electronic device 301 to move toward the lighting device 302, and another user may carry the lighting device 302 to move toward the electronic device 301. After the electronic device 301 is located near the lighting device 302, the electronic device 301 may automatically display the application interface of the specified application and automatically control the lighting device 302 to be in the second lighting mode, so that a user can quickly start to perform content browsing through the specified application under balanced light for eye protection, to improve user experience.

In some embodiments, as shown in FIG. 3, the electronic device 301 may be stably placed on a base 302a of the lighting device 302, and may rest on a support base 302b of the lighting device 302. Placement of the electronic device 301 on the base 302a of the lighting device 302 may be specifically implemented depending on a groove 302c or a support mechanism (not shown in the figure) on the base 302a of the lighting device 302. This is not uniquely limited in this embodiment of this application.

The device control method provided in embodiments of this application is described in detail in the following.

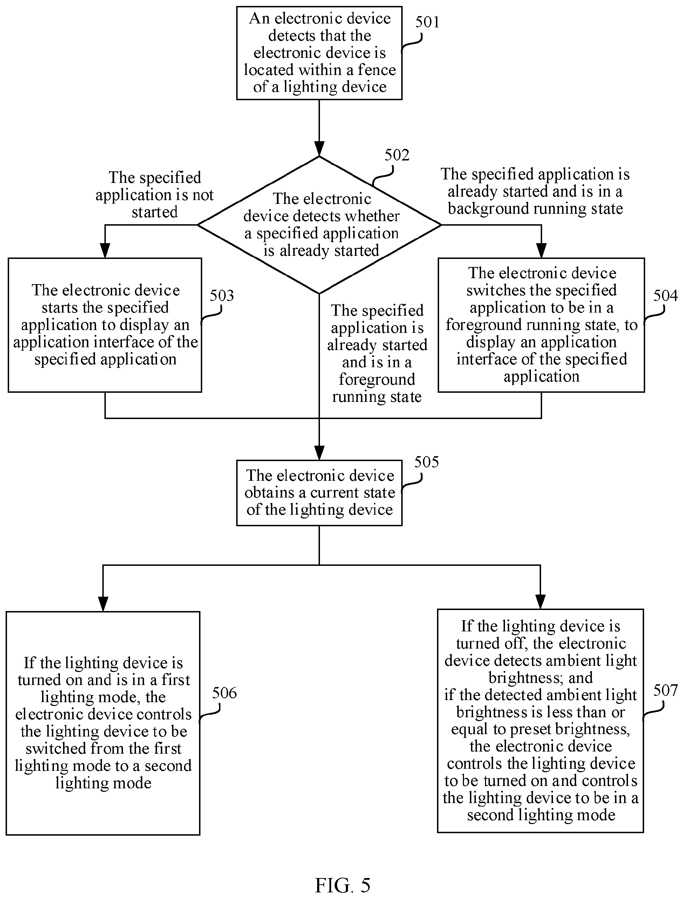

FIG. 5 is a schematic flowchart of a device control method according to an embodiment of this application. Refer to FIG. 5. The method includes the following steps.

Step 501: An electronic device detects that the electronic device is located within a fence of a lighting device.

The "fence" in this embodiment of this application is a region fence, and is a virtual boundary enclosed by a virtual fence. The virtual boundary defines a specific region. The "fence" in this embodiment of this application refers to a fence of the lighting device. The fence of the lighting device is configured for defining a region around the lighting device.

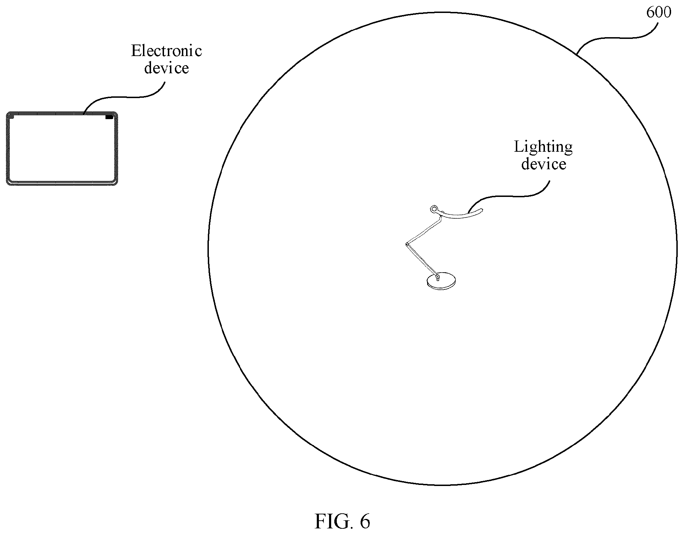

For example, as shown in FIG. 6, the region defined by the fence of the lighting device may be a circular region 600 with the lighting device as a center and a preset distance as a radius. The preset distance may be set in advance, and the preset distance may be set to be small. For example, the preset distance may be 30 cm or 35 cm. This is not uniquely limited in this embodiment of this application. Alternatively, the region defined by the fence of the lighting device may be a rectangular region with the lighting device as a center and a specific size as a length and a width. Certainly, the region defined by the fence of the lighting device may alternatively be a region of another shape as long as the region is the region around the lighting device.

In this case, if the electronic device detects that the electronic device is located within the fence of the lighting device, it indicates that the electronic device is close to the lighting device. If the electronic device detects that the electronic device is not located within the fence of the lighting device, it indicates that the electronic device is far away from the lighting device.

In some embodiments, the lighting device may send a broadcast message. After receiving the broadcast message, the electronic device may detect whether the electronic device is located within the fence of the lighting device that sends the broadcast message.

The lighting device may continuously send the broadcast message after being powered on, for example, may periodically send the broadcast message. In other words, after being powered on, the lighting device may continuously send the broadcast message when the lighting device is turned on (that is, lights are turned on) or turned off (that is, lights are turned off).

For example, the broadcast message may be a Bluetooth broadcast message. Certainly, the broadcast message may alternatively be another broadcast message that can be used for ranging. This is not uniquely limited in this embodiment of this application.

The broadcast message may carry a lighting device identifier. Optionally, the broadcast message may further carry a transmission power of the broadcast message.

The lighting device identifier is used for uniquely identifying the lighting device. For example, the lighting device identifier may be a combination of a number of the lighting device and a media access control (media access control, MAC) address, or the lighting device identifier may be a product serial number of the lighting device. Certainly, the lighting device identifier may alternatively be other information that can identify the lighting device. This is not uniquely limited in this embodiment of this application.

For example, there may be a device number field in a message format of the broadcast message. The device number field may include the number of the lighting device. A source address of the broadcast message may include the MAC address of the lighting device. In this way, a receiver of the broadcast message may combine the number and the MAC address of the lighting device into the lighting device identifier.

After receiving the broadcast message, the electronic device may detect whether the electronic device is located within a fence of the lighting device (namely, a lighting device identified by the lighting device identifier in the broadcast message) that sends the broadcast message.

For example, after receiving the broadcast message, the electronic device may detect a signal strength of the broadcast message, and then determine, based on the signal strength of the broadcast message, a distance between the lighting device identified by the lighting device identifier in the broadcast message and the electronic device. If the distance between the lighting device and the electronic device is less than or equal to the preset distance, it indicates that the electronic device is located within the fence of the lighting device. If the distance between the lighting device and the electronic device is greater than the preset distance, it indicates that the electronic device is not located within the fence of the lighting device.

For example, the signal strength of the broadcast message may be a received signal strength indication (received signal strength indication, RSSI) value of the broadcast message.

Optionally, an operation in which the electronic device determines, based on the signal strength of the broadcast message, the distance between the lighting device identified by the lighting device identifier in the broadcast message and the electronic device may be as follows. The electronic device determines the distance based on the transmission power of the broadcast message and the signal strength of the broadcast message, and the determined distance is the distance between the electronic device and the lighting device identified by the lighting device identifier in the broadcast message.

The operation in which the electronic device determines the distance based on the transmission power of the broadcast message and the signal strength of the broadcast message is similar to an operation in which a device determines a distance between the device and a sender of a received message based on a transmission power of the message and a signal strength of the message in a related technology. This is not described in detail in embodiments of this application.

In a case, each time receiving a broadcast message, the electronic device detects whether the electronic device is located within a fence of a lighting device identified by a lighting device identifier in the broadcast message.

In another case, when the electronic device changes from a mobile state to a stationary state, it is then detected whether the electronic device is located within a fence of a lighting device identified by a lighting device identifier in a latest received broadcast message. However, when the electronic device is continuously in the mobile state or is continuously in the stationary state, it is not detected whether the electronic device is located within the fence of the lighting device identified by the lighting device identifier in the received broadcast message.

When the electronic device is in the mobile state, the distance between the electronic device and the lighting device changes constantly, and in this case, a user may not use the electronic device. Therefore, in this case, the electronic device may not detect whether the electronic device is located within the fence of the lighting device. In this way, a processing resource can be reduced. When the electronic device changes from the mobile state to the stationary state, there is a large probability that the distance between the electronic device and the lighting device is already stable, and in this case, the user may also start to use the electronic device. Therefore, in this case, the electronic device may determine whether the electronic device is located within the fence of the lighting device, to perform a subsequent control operation based on this. During the stationary state of the electronic device, the distance between the electronic device and the lighting device is usually fixed. Therefore, in this case, the electronic device does not need to detect whether the electronic device is located within the fence of the lighting device. In this way, the processing resource can be reduced.

In the both cases, after each time detecting whether the electronic device is located within the fence of the lighting device, the electronic device can learn whether the electronic device is currently located within the fence of the lighting device. In this case, if the electronic device detects that the electronic device is located within the fence of the lighting device this time, and detects that the electronic device is not located within the fence of the lighting device last time, it indicates that the electronic device enters the fence of the lighting device from outside the fence of the lighting device. If the electronic device detects that the electronic device is not located within the fence of the lighting device this time, and detects that the electronic device is located within the fence of the lighting device last time, it indicates that the electronic device exits from inside the fence of the lighting device to outside the fence of the lighting device. If the electronic device detects that the electronic device is not located within the fence of the lighting device this time and the last time, it indicates that the electronic device is always located outside the fence of the lighting device. If the electronic device detects that the electronic device is located within the fence of the lighting device this time and the last time, it indicates that the electronic device is always located within the fence of the lighting device.

If the electronic device is located within the fence of the lighting device, it indicates that the electronic device is close to the lighting device. In this case, the user may perform content browsing by using the specified application in the electronic device under lighting of the lighting device. Therefore, it may be subsequently determined whether the specified application in the electronic device is already started.

Step 502: The electronic device detects whether the specified application is already started.

The specified application may be used for performing content browsing. For example, the specified application may be an application used for browsing text content or video content. For example, the specified application may be an application used for learning. Certainly, the specified application may alternatively be another application that can perform content browsing. This is not uniquely limited in this embodiment of this application.

If the specified application is not started, the electronic device may continue to perform step 503 as follows. If the specified application is already started and is in a background running state, the electronic device may continue to perform step 504 as follows. If the specified application is already started and is in a foreground running state, the electronic device may continue to perform step 505 as follows.

Optionally, when the electronic device is located within the fence of the lighting device, whether the specified application is already started may continue to be detected in two cases.

In one case, in response to the electronic device in an unlocked state entering the fence of the lighting device from outside the fence, the electronic device may detect whether the specified application is already started. In other words, if the electronic device determines that the electronic device is in the unlocked state when entering the fence of the lighting device from outside the fence, the electronic device may continue to detect whether the specified application is already started.

In other words, when the electronic device is in the unlocked state, if the electronic device gradually approaches the lighting device until the electronic device is located near the lighting device, it indicates that the user may perform content browsing by using the specified application in the electronic device under lighting of the lighting device. Therefore, the electronic device may continue to determine whether the specified application in the electronic device is already started.

In another case, in response to the electronic device located within the fence of the lighting device changing from a screen-locked state to the unlocked state, the electronic device may detect whether the specified application is already started. In other words, if the electronic device determines that the electronic device is located within the fence of the lighting device when the electronic device changes from the screen-locked state to the unlocked state, the electronic device may continue to detect whether the specified application is already started.

In this case, if the electronic device changes from the screen-locked state to the unlocked state, the electronic device may detect whether the electronic device is located within the fence of the lighting device. Specifically, the electronic device may detect whether the electronic device is located within the fence of the lighting device identified by the lighting device identifier in the latest received broadcast message. If the electronic device is located within the fence of the lighting device identified by the lighting device identifier in the latest received broadcast message, the electronic device may continue to detect whether the specified application is already started.

In other words, when the electronic device is located near the lighting device, if a screen of the electronic device is unlocked, it indicates that the user may perform content browsing by using the specified application in the electronic device under lighting of the lighting device. Therefore, it may continue to determine whether the specified application in the electronic device is already started.

Step 503: If the specified application is not started, the electronic device starts the specified application to display an application interface of the specified application, and then performs step 505.

In this case, the electronic device does not start the specified application before being located near the lighting device. For example, when the user does not open the specified application in the electronic device, the user approaches the lighting device with the electronic device, and moves until the electronic device is located near the lighting device. When the electronic device is located near the lighting device, the specified application is automatically started to display the application interface of the specified application. In this case, the specified application is in a running state. This helps the user quickly perform content browsing by using the specified application, and improves user experience.

Optionally, before starting the specified application, the electronic device may first make a notification reminder to the user, to notify the user that the specified application is to be automatically started. In one aspect, the notification reminder may be displaying a reminder message on the electronic device to remind the user that the specified application is to be started. In another aspect, the notification reminder may alternatively be playing reminder audio on the electronic device, for example, a piece of audio with a scientific feeling may be played, to remind the user to prepare for browsing the specified application.

Step 504: If the specified application is already started and is in the background running state, the electronic device switches the specified application to be in the foreground running state, to display the application interface of the specified application, and then performs step 505.

In this case, the electronic device already starts the specified application before being located near the lighting device. For example, after opening the specified application in the electronic device, the user switches the specified application to be run in the background. Then, the user approaches the lighting device with the electronic device, and moves until the electronic device is located near the lighting device. When the electronic device is located near the lighting device, the specified application is in the background running state. The electronic device may automatically switch the specified application to be in the foreground running state, to display the application interface of the specified application. This helps the user quickly perform content browsing by using the specified application, and improves the user experience.

Optionally, before switching the specified application to be in the foreground running state, the electronic device may first make the notification reminder to the user, to notify the user that the specified application is to be automatically run in the foreground. In one aspect, the notification reminder may be displaying the reminder message on the electronic device to remind the user that the specified application is to be run in the foreground. In another aspect, the notification reminder may alternatively be playing the reminder audio on the electronic device, for example, a piece of audio with a scientific feeling may be played, to remind the user to prepare for browsing the specified application.

Further, after step 502, if the specified application is already started and is in the foreground running state, it indicates that the electronic device already displays the application interface of the specified application. In this case, the electronic device may continue to perform step 505.

In this case, the electronic device already starts the specified application before being located near the lighting device. For example, after the user opens the specified application in the electronic device, the specified application is always run in the foreground, in other words, the electronic device always displays the application interface of the specified application. The user approaches the lighting device with the electronic device, and moves until the electronic device is located near the lighting device. When the electronic device is located near the lighting device, the specified application is in the foreground running state, and the electronic device displays the application interface of the specified application. In this case, the electronic device may continue to perform step 505.

Step 505: The electronic device obtains a current state of the lighting device.

Through steps 501 to 504 described above, the electronic device may determine that the electronic device is located within the fence of the lighting device, and the electronic device already displays the application interface of the specified application. In this case, the electronic device may obtain the current state of the lighting device, to control, based on the current state, the lighting device to bring the user with better browsing experience.

The current state of the lighting device may include whether the lighting device is currently turned on (that is, the lights are turned on) or turned off (that is, the lights are turned off). Further, when the lighting device is currently turned on, the current state of the lighting device may further include a current lighting mode of the lighting device. Optionally, the lighting modes of the lighting device may include a first lighting mode and a second lighting mode. The first lighting mode and the second lighting mode are described above in the embodiment in FIG. 3. Details are not described in this embodiment of this application.

If the lighting device is turned on, the electronic device continues to perform step 506 as follows. If the lighting device is turned off, the electronic device continues to perform step 507 as follows.

Step 506: If the lighting device is turned on and is in the first lighting mode, the electronic device controls the lighting device to be switched from the first lighting mode to the second lighting mode.

If the lighting device is turned on, it indicates that the user currently has a requirement for lighting by using the lighting device. Therefore, the electronic device may automatically switch the lighting device to be in the second lighting mode when the lighting device is in the first lighting mode. In this way, screen reflection of the electronic device can be reduced, and light can be balanced, to effectively protect eyes and improve screen content browsing experience.

Further, after step 505, if the lighting device is turned on and is in the second lighting mode, the electronic device may end the procedure.

When the lighting device is turned on and is in the second lighting mode, lighting of the lighting device can already meet a light requirement for browsing screen content of the electronic device. In this case, no other operation may be performed, and the procedure ends.

Step 507: If the lighting device is turned off, the electronic device detects ambient light brightness. If the detected ambient light brightness is less than or equal to preset brightness, the electronic device controls the lighting device to be turned on and controls the lighting device to be in the second lighting mode.

The preset brightness may be set in advance, and the preset brightness may be set to be small. In this case, if the ambient light brightness is less than or equal to the preset brightness, it indicates that the ambient light brightness is low, in other words, the environment is dark. If the ambient light brightness is greater than the preset brightness, it indicates that the ambient light brightness is high, in other words, the environment is bright.

When the lighting device is turned off, the electronic device may detect the ambient light brightness, to determine whether currently there is a requirement for lighting by using the lighting device.

If the ambient light brightness is less than or equal to the preset brightness, it indicates that the ambient light brightness is low, in other words, it indicates that the lighting device currently needs to be used for lighting. In this case, the electronic device may automatically control the lighting device to be turned on and control the lighting device to be in the second lighting mode. In this way, when needed light is replenished, the screen reflection of the electronic device can be reduced, and light can be balanced, to effectively protect eyes and improve the screen content browsing experience.

If the ambient light brightness is greater than the preset brightness, it indicates that the ambient light brightness is high, and indicates that there is no need for lighting by using the lighting device. In this case, the electronic device does not need to perform another operation, and the procedure may end.

Further, the electronic device may further continuously detect the ambient light brightness during running of the specified application. For example, the electronic device may periodically detect the ambient light brightness.

If detecting, during running of the specified application, that the ambient light brightness is greater than the preset brightness, the electronic device does not perform another operation, and continues to monitor the ambient light brightness.

If the electronic device detects, during running of the specified application, that the ambient light brightness is less than or equal to the preset brightness, the electronic device detects whether the electronic device is located within the fence of the lighting device. Specifically, the electronic device may detect whether the electronic device is located within the fence of the lighting device identified by the lighting device identifier in the latest received broadcast message. If the electronic device detects that the electronic device is located within the fence of the lighting device, the electronic device obtains the current state of the lighting device. If the lighting device is turned on and is in the second lighting mode, the electronic device does not perform another operation, and the procedure ends. If the lighting device is turned on and is in the first lighting mode, the electronic device switches the lighting device from the first lighting mode to the second lighting mode, to reduce the screen reflection of the electronic device, so that the light is balanced, to effectively protect eyes and improve the screen content browsing experience. If the lighting device is turned off, the electronic device controls the lighting device to be turned on and controls the lighting device to be in the second lighting mode, to reduce the screen reflection of the electronic device when replenishing needed light, so that the light is balanced, to effectively protect eyes and improve the screen content browsing experience. However, if the electronic device detects that the electronic device is not located within the fence of the lighting device, the electronic device displays reminder information. The reminder information is used for reminding to move to the lighting device. In this way, when the user browses content by using the specified application in the electronic device, the user may be reminded in a timely manner to move to the lighting device for browsing when the environment becomes dark, to protect vision and improve browsing experience. Further, the electronic device may further send the reminder information to a specified user account, so that a user corresponding to the specified user account can learn in a timely manner that the user corresponding to the electronic device is browsing the screen content of the electronic device in a dark environment, so that a corresponding measure can be taken.

It should be noted that, by using the foregoing device control method, embodiments of this application may implement at least the following three scenarios. The following three scenarios may be implemented separately or in combination with each other. This is not limited in embodiments of this application.

In a first scenario, the electronic device may automatically start the specified application when the electronic device is located near the lighting device.

Specifically, the user approaches the lighting device with the electronic device. After moving until the electronic device is located near the lighting device, if the user lights up and unlocks the screen of the electronic device, the electronic device may automatically start the specified application to display the application interface of the specified application. Alternatively, when the user lights up and unlocks the screen of the electronic device, the user approaches the lighting device with the electronic device. When the user moves until the electronic device is located near the lighting device, the electronic device may automatically start the specified application to display the application interface of the specified application.

For example, the user approaches a table light with a tablet computer, and then the user places the tablet computer and the table light on a desk. Alternatively, when a stand exists in a base of the table light, the user places the tablet computer on the stand. In this case, the tablet computer is located near the table light. Then, the user opens the tablet computer, and the tablet computer automatically starts a specific application used for learning and displays a corresponding application interface, so that the user can quickly enter a learning state.

In a second scenario, when the electronic device is located near the lighting device, the electronic device may automatically adjust the lighting device to be in the second lighting mode when the lighting device is turned on.

Specifically, after the user moves with the electronic device until the electronic device is located near the lighting device, the user turns on the lighting device. Then, the user lights up and unlocks the screen of the electronic device, and performs content browsing by using the specified application in the electronic device. In this case, the electronic device may automatically adjust the lighting device to be in the second lighting mode.

For example, if the user turns on the table light and then uses, under the table light, the specific application in the tablet computer for learning, the tablet computer may automatically adjust the table light to be in the second lighting mode. In this way, modes of the tablet computer and the table light can be jointed to ensure an eye environment of the tablet computer.

In a third scenario, when the electronic device is located near the lighting device, the electronic device may automatically turn on the lighting device and control the lighting device to be in the second lighting mode when the lighting device is turned off and the environment is dark.

Specifically, the user performs content browsing by using the specified application in the electronic device, and the surrounding environment is gradually darkened. In this case, the electronic device may automatically control the lighting device to be turned on and control the lighting device to be in the second lighting mode when the lighting device exists nearby. If there is no lighting device nearby, the electronic device may display reminder information to remind the user that the user may go to the lighting device to browse the screen content of the electronic device.

For example, the user uses the specific application in the tablet computer for learning. Over time, the surrounding environment is gradually darkened. In this case, the tablet computer may automatically turn on the table light and control the table light to be in the second lighting mode when there is a table light nearby. In other words, the lights may be automatically turned on when there is dim light, to protect eyes. When there is no table light nearby, the tablet computer may remind the user to learn under the table light.

It should be noted that, the device control method in embodiments of this application is an automatic control function. For example, there may be a setting button of the automatic control function in the electronic device. The user may choose to turn the setting button on or off. When the user turns on the setting button, the electronic device may automatically display the application interface of the specified application and automatically control the lighting devices based on the device control method provided in embodiments of this application. When the user turns off the setting button, the electronic device does not automatically display the application interface of the specified application and does not automatically control the lighting devices, but the user manually displays the application interface of the specified application in the electronic device and manually controls the lighting device.

In this embodiment of this application, when the electronic device is located near the lighting device, the application interface of the specified application in the electronic device may be automatically displayed, so that the user is not interfered by another application. In addition, when the specified application is run and the lighting device is turned on, the lighting device may be automatically controlled to be in the second lighting mode, to reduce the screen reflection of the electronic device and balance light, to effectively protect eyes and improve the screen content browsing experience. When the specified application is run and the lighting device is turned off, the lighting device may be automatically controlled to be turned on and controlled to be in the second lighting mode when the ambient light brightness is low. In this way, when needed light is replenished, the screen reflection of the electronic device is reduced, and light is balanced, to effectively protect the eyes and improve the screen content browsing experience.

In some embodiments, the device control method described above may be implemented by a related module in a software system of the electronic device. The following describes the device control method described above by using an example in which the electronic device is a tablet computer, the lighting device is a table light, and the second lighting mode is a screen reading mode.

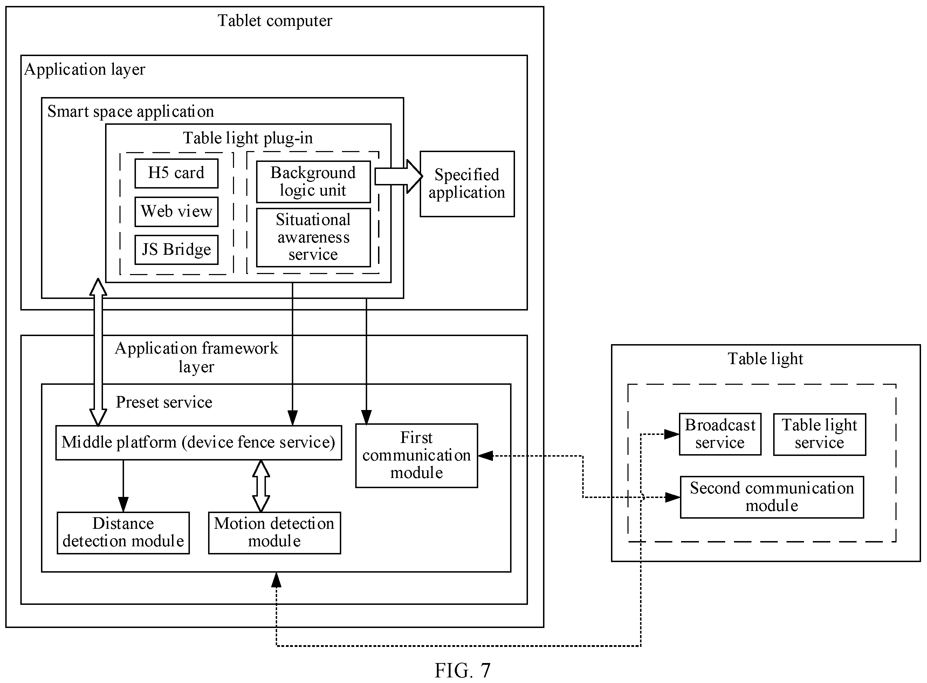

FIG. 7 is a block diagram of a software system of a tablet computer and a table light according to an embodiment of this application.

Refer to FIG. 7, a software system of the tablet computer includes an application layer and an application framework layer.

The application layer includes a specified application and a smart space application. The application framework layer includes a preset service.

The specified application may be used for performing content browsing. For example, the specified application may be an application used for browsing text content or video content. For example, the specified application may be an application used for learning. Certainly, the specified application may alternatively be another application that can perform content browsing. This is not uniquely limited in this embodiment of this application.

The smart space application is an application used for managing various smart devices. A plug-in for controlling various smart devices may be set. In this embodiment of this application, a table light plug-in for controlling the table light may be set. Optionally, the table light plug-in may be a native (native) plug-in. For example, the table light plug-in may include a 5th generation hyper text markup language 5 (hyper text markup language 5, HTML5) card (that is, an H5 card), a web view (also referred to as a Webview), a JS Bridge, a background logic unit, a situational awareness service (also referred to as an Awareness software development kit (software development kit, SDK)), and the like. The JS Bridge is configured to provide JavaScript with an interface for invoking a Native function. The background logic unit is a main unit configured to implement the method process in embodiments of this application. The background logic unit may start the specified application, and may further control the table light by using a first communication module. Optionally, the background logic unit may be implemented by using a Java language.

The preset service includes a middle platform, a distance detection module, a motion detection module, and a first communication module.

The middle platform may be continuously run when the tablet computer is in a start-up state. For example, the middle platform may be an artificial intelligence (artificial intelligence, AI) middle platform. A device fence service is provided in the middle platform. For example, the device fence service includes a fence entry event and a fence exit event. The "fence" in this embodiment of this application is a region fence, and is a virtual boundary enclosed by a virtual fence. The virtual boundary defines a specific region. The "fence" in this embodiment of this application refers to a fence of the table light. For example, as shown in FIG. 6, in this embodiment of this application, a region defined by the "fence" may be a circular region 600 with the table light as a center and a preset distance as a radius. If the tablet computer enters a region near the table light, for example, if the tablet computer enters the circular region 600 with the table light as the center and the preset distance as the radius, the fence entry event in the device fence service is triggered. If the tablet computer exits the region near the table light, for example, if the tablet computer leaves the circular region 600 with the table light as the center and the preset distance as the radius, the fence exit event in the device fence service is triggered. It should be noted that, in this embodiment of this application, the fence entry event indicates the tablet computer to enter a fence of the table light, in other words, indicates the tablet computer to enter the region near the table light. The fence exit event indicates the tablet computer to exit the fence of the table light, in other words, indicates the tablet computer to exit the region near the table light.

The distance detection module is configured to detect a distance between the tablet computer and the table light, in other words, detect whether the tablet computer is located within the fence of the table light. For example, the distance detection module may be a nearby module, and the nearby module may be configured to sense a nearby device. Optionally, when receiving a broadcast message sent by the table light, the distance detection module may determine a distance between the distance detection module and the table light based on the broadcast message. For example, the broadcast message may be a Bluetooth broadcast message. Certainly, the broadcast message may alternatively be another broadcast message that can be used for ranging. This is not uniquely limited in this embodiment of this application.

The motion detection module may detect whether the tablet computer is currently in a stationary state or a mobile state. For example, the motion detection module may be a mobile sensing platform (mobile sensing development platform, MSDP) service (service). In a possible case, the motion detection module may trigger the distance detection module through the middle platform to detect the distance between the tablet computer and the table light when detecting that the tablet computer changes from the mobile state to the stationary state. Optionally, the motion detection module and the middle platform may transfer information in a static broadcast manner or a Pending Intent manner.

The first communication module is a module configured to communicate with the table light. The table light plug-in may obtain a state of the table light by using the first communication module, and control the table light.

Refer to FIG. 7, a software system of the table light includes a broadcast service, a table light service, and a second communication module.

The broadcast service is configured to send a broadcast message. The broadcast service may continuously send the broadcast message when the table light is powered on, for example, may periodically send the broadcast message. In other words, when the table light is powered on, the broadcast service may continuously send the broadcast message regardless of whether the table light is turned on or turned off. For example, the broadcast message may be a Bluetooth broadcast message. Certainly, the broadcast message may alternatively be another broadcast message that can be used for ranging. This is not uniquely limited in this embodiment of this application.

The table light service is a service for controlling the table light. In this embodiment of this application, the table light service may control the table light to be turned on or turned off, and may further adjust a lighting mode of the table light.

In one case, the table light service may control the table light in response to an operation that is performed on a button of the table light by a user.

In another case, when receiving a control message sent by the tablet computer, the table light service may control the table light in response to the control message.

For example, the control message may be a control message automatically generated by a background logic unit of a table light plug-in in a smart space application of the tablet computer based on the distance between the tablet computer and the table light, a state of the table light, ambient light brightness, and the like.

For another example, the control message may be a corresponding control message generated by the table light plug-in in the smart space application of the tablet computer based on an operation of the user in a control interface of the table light plug-in.

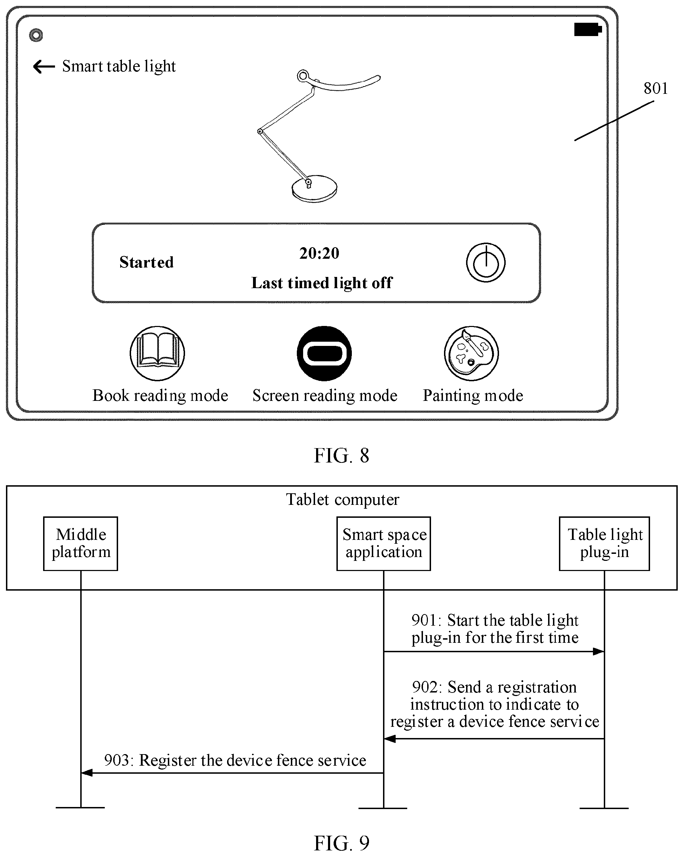

For example, as shown in FIG. 8, a tablet computer displays a control interface 801 of a table light plug-in. The control interface 801 may include a plurality of control options, for example, may include control options of a book reading mode, a screen reading mode, and a painting mode. If a user taps a control option of the screen reading mode in the control interface 801, the table light plug-in may generate a corresponding control message. The control message indicates to adjust a lighting mode of the table light to the screen reading mode. Then, the table light plug-in may send the control message to the table light. After receiving the control message, the table light service in the table light may control the table light to be in the screen reading mode.

The second communication module is a module configured to communicate with the tablet computer. For example, the table light may receive, by using the second communication module, a control message sent by the tablet computer.

With reference to the software system described in the embodiment in FIG. 7 above, the following describes the device control method provided in embodiments of this application by using an example.

Before the device control method provided in embodiments of this application is performed, two preparation works may be first performed.

In one aspect, a technician may preset an application name of a specified application in the table light plug-in.

Optionally, when developing the table light plug-in, a technician may preset the application name of the specified application in the table light plug-in, so that the table light plug-in can subsequently start the specified application based on the application name.

In the other aspect, a user may install the table light plug-in in a smart space application of the tablet computer.

Optionally, the user may open the smart space application in the tablet computer, and then bind, in the smart space application, a table light that needs to be used. In a possible case, after the table light is successfully bound in the smart space application, the smart space application may automatically download and install a table light plug-in corresponding to the table light. In another possible case, after the table light is successfully bound in the smart space application, a device name of the table light is added to a device list in the smart space application. After the user taps the device name of the table light in the device list, the smart space application may download and install the table light plug-in corresponding to the table light. The table light plug-in may be configured to control the table light. The table light plug-in may obtain basic information, such as a table light identifier and a product serial number, of the corresponding table light. Optionally, the table light plug-in may be displayed in a form of a card in an application interface of the smart space application.

After the foregoing preparation works are performed, the table light plug-in may register a device fence service with a middle platform. Details are as follows.

FIG. 9 is a schematic diagram of a process of registering a device fence service according to an embodiment of this application. Refer to FIG. 9. The process may include step 901 to step 903 as follows.

Step 901: A smart space application starts a table light plug-in for the first time.

After installing the table light plug-in in the smart space application, a user may start the table light plug-in in the smart space application. For example, the user may tap a card for entering the table light plug-in in an application interface of the smart space application, so that the smart space application can start the table light plug-in.

If the table light plug-in is started for the first time, for example, if the user taps, for the first time, the card for entering the table light plug-in in the application interface of the smart space application, the table light plug-in may register a device fence service with a middle platform by using the smart space application. The specific process includes step 902 and step 903 as follows.

Step 902: The table light plug-in sends a registration instruction to the smart space application, where the registration instruction is used for instructing the smart space application to register the device fence service.

Optionally, the table light plug-in may register the device fence service through a cross-process access service (also referred to as an android interface definition language (android interface definition language, AIDL) service).

Step 903: After receiving the registration instruction, the smart space application registers the device fence service with the middle platform.

Optionally, the smart space application may register the device fence service through the cross-process access service.

One point to be noted is that the smart space application may be bound to the middle platform in advance. In this way, the smart space application may register the device fence service with the middle platform, and may invoke the device fence service. Optionally, the smart space application and the middle platform may transfer information in a static broadcast or Pending Intent manner.

Another point to be noted is that, when registering the device fence service, the table light plug-in may provide information such as a table light identifier and a fence range (for example, may be a preset distance in this embodiment of this application) to the middle platform. In this way, the registered device fence service may be triggered when the tablet computer enters or exits a fence range of a table light identified by the table light identifier. Optionally, when registering the device fence service, the table light plug-in may further provide the smart space application with an association relationship between a table light identifier and a product serial number, so that the smart space application can accurately determine, based on the table light identifier, a table light with a corresponding product serial number subsequently.

The table light identifier is used for uniquely identifying the table light. The table light identifier may be a number or a MAC address of the table light, or may be a combination of the number and the MAC address of the table light. Certainly, the table light identifier may alternatively be other information that can be used for identifying the table light. This is not uniquely limited in this embodiment of this application.

After completing the foregoing operations, the device control method provided in embodiments of this application may start to be performed. Details are as follows.

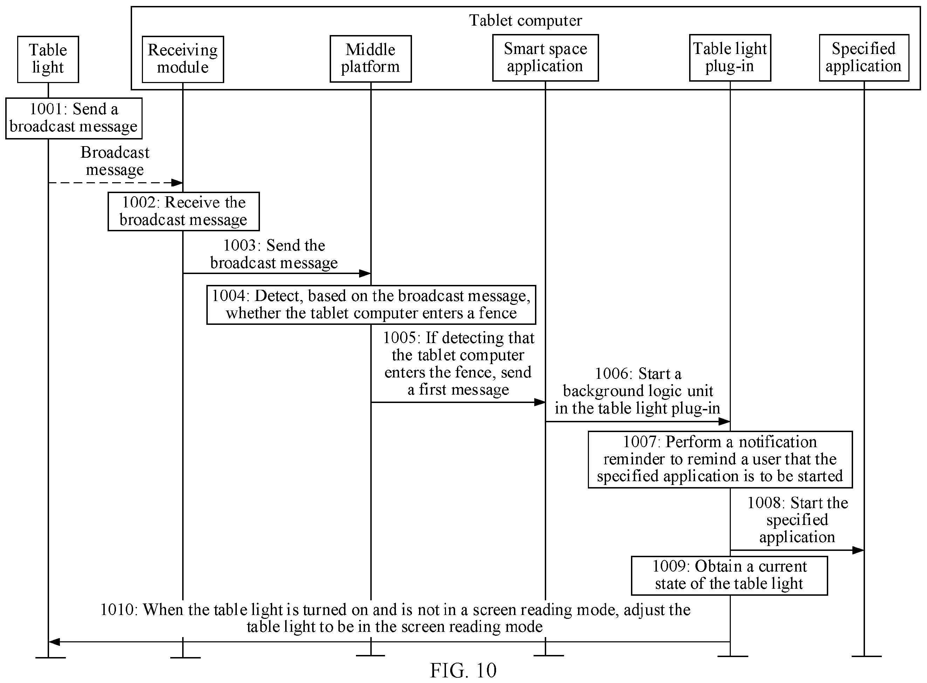

FIG. 10 is a schematic flowchart of a device control method according to an embodiment of this application. Refer to FIG. 10. The method includes the following steps.

Step 1001: A table light sends a broadcast message.

The table light may continuously send the broadcast message after being powered on. In this embodiment of this application, after being powered on, the table light may continuously send the broadcast message when the table light is turned on or turned off. For example, a broadcast service in the table light may periodically send the broadcast message.

For example, the broadcast message may be a Bluetooth broadcast message. Certainly, the broadcast message may alternatively be another broadcast message that can be used for ranging. This is not uniquely limited in this embodiment of this application.

The broadcast message may carry a table light identifier. For example, there may be a device number field in a message format of the broadcast message. The device number field may include a number of the table light. A source address of the broadcast message may include a MAC address of the table light. In this way, a receiver of the broadcast message may combine the number and the MAC address of the table light into the table light identifier.

Optionally, the broadcast message may further carry a transmission power of the broadcast message.

Step 1002: A receiving module in a tablet computer receives the broadcast message sent by the table light.

When a user approaches the table light with the tablet computer, the receiving module in the tablet computer may receive the broadcast message sent by the table light.

Optionally, after receiving the broadcast message, the receiving module may detect a signal strength of the broadcast message. For example, the signal strength of the broadcast message may be an RSSI value of the broadcast message.

Step 1003: The receiving module sends the broadcast message to a middle platform.

Optionally, the receiving module may send both the broadcast message and the signal strength of the broadcast message to the middle platform.

Step 1004: The middle platform detects, based on the broadcast message, whether the tablet computer enters a fence.

It should be noted that, in the foregoing embodiment in FIG. 9, a table light identifier is provided when the table light plug-in registers the device fence service in the middle platform. Therefore, after receiving the broadcast message sent by the receiving module, the middle platform may first check whether the table light identifier carried in the broadcast message is the same as the table light identifier used during registration. If identifiers are the same, the middle platform processes the broadcast message, in other words, detects, based on the broadcast message, whether the tablet computer enters the fence. If the identifiers are different, the middle platform does not process the broadcast message, in other words, discards the broadcast message.

The middle platform detects, based on the broadcast message, whether the tablet computer enters the fence, in other words, detects whether the tablet computer enters a fence of a table light identified by the table light identifier carried in the broadcast message.

Optionally, an operation in which the middle platform detects, based on the broadcast message, whether the tablet computer enters the fence may be as follows. The middle platform invokes, based on the signal strength of the broadcast message, a distance detection module to determine a distance between the table light identified by the table light identifier carried in the broadcast message and the tablet computer. If the distance is greater than a preset distance, it is determined that the tablet computer enters the fence. If the distance is less than or equal to the preset distance, it is determined that the tablet computer is currently located within the fence. If it is last detected that the distance between the table light identified by the table light identifier and the tablet computer is greater than the preset distance, it is determined that the tablet computer enters the fence. If it is last detected that the distance between the table light identified by the table light identifier and the tablet computer is less than or equal to the preset distance, it is determined that the tablet computer is continuously located within the fence.

Optionally, an operation in which the middle platform invokes, based on the signal strength of the broadcast message, the distance detection module to determine the distance between the table light identified by the table light identifier carried in the broadcast message and the tablet computer may be as follows. The tablet computer invokes, based on the transmission power of the broadcast message and the signal strength of the broadcast message, the distance detection module to determine the distance between the table light identified by the table light identifier carried in the broadcast message and the tablet computer.

For example, each time receiving a broadcast message, the middle platform detects, based on the broadcast message, whether the tablet computer enters the fence.

For another example, after receiving motion state change information sent by a motion detection module, the middle platform detects, based on a latest received broadcast message, whether the tablet computer enters the fence. When not receiving the motion state change information sent by the motion detection module, the middle platform may not detect, based on the received broadcast message, whether the tablet computer enters the fence.

The motion state change information indicates that the tablet computer changes from a mobile state to a stationary state.

When the tablet computer is in the mobile state, the distance between the tablet computer and the table light changes constantly, and in this case, the user may not use the tablet computer. Therefore, in this case, the middle platform may not detect whether the tablet computer enters the fence, so that a processing resource can be reduced. When the tablet computer changes from the mobile state to the stationary state, there is a large probability that the distance between the tablet computer and the table light is already stable, and in this case, the user may also start to use the tablet computer. Therefore, in this case, the middle platform may detect whether the tablet computer enters the fence, so that a subsequent control operation may be performed when the tablet computer enters the fence. When the tablet computer is in the stationary state, the distance between the tablet computer and the table light is usually fixed. Therefore, in this case, the middle platform does not need to detect whether the tablet computer enters the fence. In this way, the processing resource can be reduced.

If the middle platform detects that the tablet computer does not enter the fence or the middle platform detects that the tablet computer is continuously located within the fence, the middle platform ends the procedure and continues to receive the broadcast message. If the middle platform detects that the tablet computer enters the fence, the following step 1005 is continued to be performed.

Step 1005: If the middle platform detects that the tablet computer enters the fence, the middle platform sends a first message to the smart space application.

If the middle platform detects that the tablet computer enters the fence, the middle platform may trigger a fence entry event in the device fence service to send the first message to the smart space application. The first message carries a table light identifier, and the first message is used for indicating the tablet computer to enter a fence of a table light identified by the table light identifier.

Optionally, after receiving the first message, the smart space application may obtain, based on the table light identifier carried in the first message, a corresponding product serial number from an association relationship between the table light identifier and the product serial number, and the obtained product serial number is a product serial number of a table light identified by the table light identifier carried in the first message.

Step 1006: The smart space application starts a background logic unit in the table light plug-in.

Optionally, the smart space application may start (also referred to as pull up) the background logic unit in the table light plug-in in a callback manner, and the product serial number may be carried in a start-up parameter of the background logic unit, to indicate that the tablet computer is located near a table light corresponding to the product serial number.

Optionally, the table light plug-in may then perform the following step 1007 to step 1010 when the tablet computer is in an unlocked state.

Step 1007: The table light plug-in performs a notification reminder to remind the user that a specified application is to be started.

The background logic unit in the table light plug-in may first perform the notification reminder to the user before the specified application is started, to notify the user that the specified application is to be automatically started. In one aspect, the notification reminder may be displaying a reminder message on the tablet computer to remind the user that the specified application is to be started. In another aspect, the notification reminder may alternatively be playing reminder audio on the tablet computer, for example, a piece of audio with a scientific feeling may be played, to remind the user to prepare for browsing the specified application.

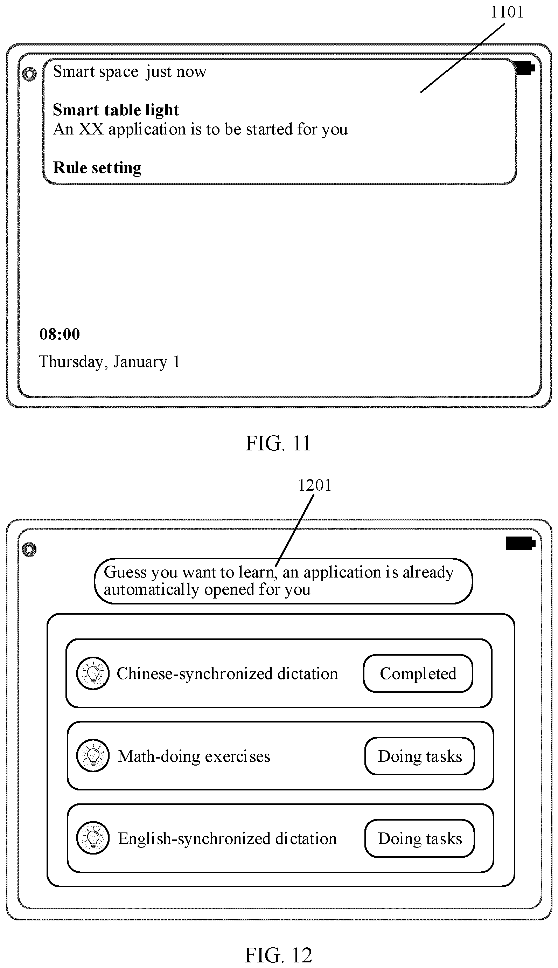

For example, as shown in FIG. 11, the table light plug-in may display a reminder message 1101 on a pull-down notification bar of the tablet computer, to remind the user that the specified application (namely, the XX application shown in FIG. 11) is to be automatically started.

Step 1008: The table light plug-in starts the specified application.

Optionally, the background logic unit in the table light plug-in may start (also referred to as pull up) the specified application through an Intent mechanism. After the table light plug-in starts the specified application, the tablet computer displays an application interface of the specified application.

Optionally, after the specified application is started by the table light plug-in, the reminder message may alternatively be displayed in the application interface of the specified application, to remind the user that the specified application is automatically started.

For example, as shown in FIG. 12, the specified application may display a reminder message 1201 in the application interface of the specified application, to remind the user that the specified application is automatically started.

Step 1009: The table light plug-in obtains a current state of the table light.

Optionally, the background logic unit in the table light plug-in may send a state query message to the table light by using a first communication module, to request to query the current state of the table light. After receiving the state query message by using the second communication module, a table light service in the table light may send state information to the tablet computer by using the second communication module. The background logic unit in the table light plug-in may receive the state information by using the first communication module. The background logic unit in the table light plug-in determines the current state of the table light based on the state information.

Step 1010: When the table light is turned on and not in a screen reading mode, the table light plug-in adjusts the table light to be in the screen reading mode.

Optionally, the background logic unit in the table light plug-in may send a control message to the table light by using the first communication module, to request that the table light is adjusted to be in the screen reading mode. After receiving the control message by using the second communication module, the table light service in the table light may adjust the table light to be in the screen reading mode.

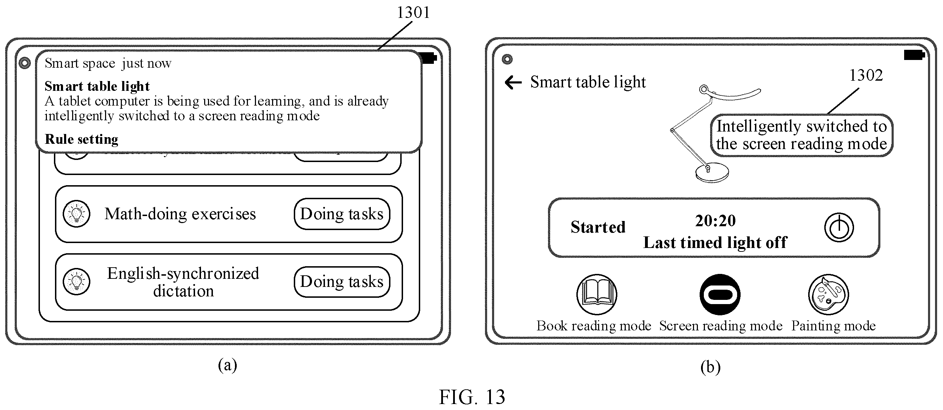

In this case, the table light plug-in may perform a notification reminder to remind the user that the table light is already automatically adjusted to be in the screen reading mode. For example, as shown in (a) in FIG. 13, the table light plug-in may display a reminder message 1301 on the pull-down notification bar of the tablet computer, to remind the user that the table light is already automatically adjusted to be in the screen reading mode. Alternatively, as shown in (b) in FIG. 13, if the user taps to enter the table light plug-in in the smart space application, the table light plug-in may display a reminder message 1302 in a control interface of the table light plug-in to remind the user that the table light is already automatically adjusted to be in the screen reading mode.

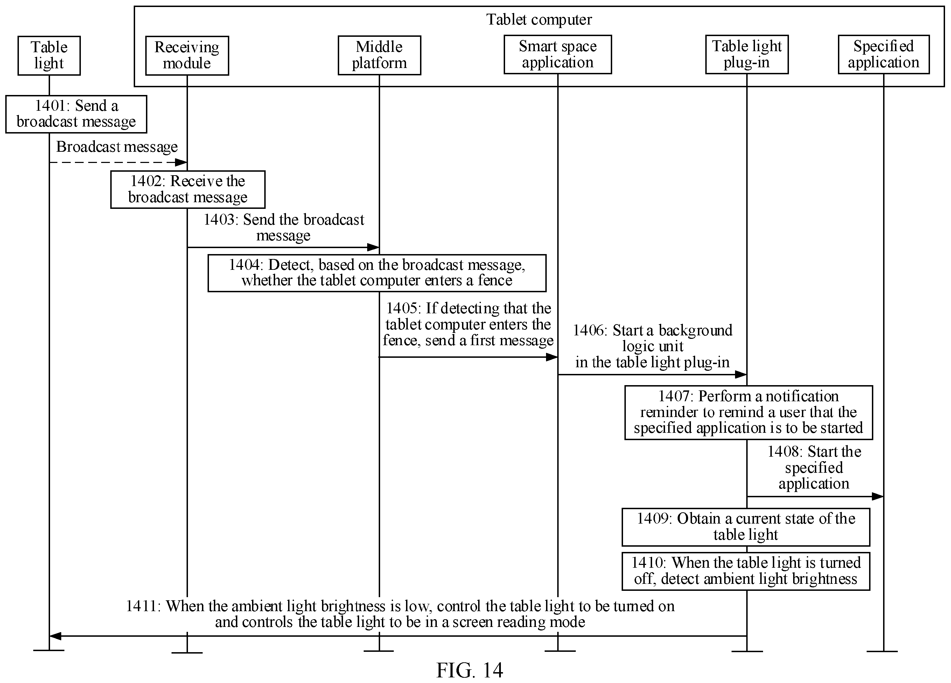

In this embodiment of this application, when the tablet computer is located near the table light, the current state of the table light may be detected. When the table light is turned on but not in the screen reading mode, the table light is automatically adjusted to be in the screen reading mode. In this way, screen reflection of the tablet computer can be reduced, and light is balanced, to effectively protect eyes and improve browsing experience when the user browses screen content of the tablet computer. However, other processes may be performed when the table light is turned off. Details are described with reference to the following embodiment in FIG. 14.

FIG. 14 is a schematic flowchart of a device control method according to an embodiment of this application. Refer to FIG. 14. The method includes the following steps.

Step 1401: A table light sends a broadcast message.

Step 1402: A receiving module in a tablet computer receives the broadcast message sent by the table light.

Step 1403: The receiving module sends the broadcast message to a middle platform.

Step 1404: The middle platform detects, based on the broadcast message, whether the tablet computer enters a fence.

If the middle station detects that the tablet computer does not enter the fence, the middle station ends the procedure and continues to receive the broadcast message. If the middle platform detects that the tablet computer enters the fence, the following step 1405 is continued to be performed.

Step 1405: If the middle platform detects that the tablet computer enters the fence, the middle platform sends a first message to a smart space application.

Step 1406: The smart space application starts a background logic unit in a table light plug-in.

Step 1407: The table light plug-in performs a notification reminder to remind the user that a specified application is to be started.

Step 1408: The table light plug-in starts the specified application.

Step 1409: The table light plug-in obtains a current state of the table light.

It should be noted that, for the foregoing step 1401 to step 1409, refer to step 1001 to step 1009 in the embodiment in FIG. 10. Details are not described in this embodiment of this application.

Step 1410: When the table light is turned off, the table light plug-in detects ambient light brightness.

Optionally, an ambient light sensor may be disposed in the tablet computer. The background logic unit in the table light plug-in may invoke the ambient light sensor to detect the ambient light brightness.

Step 1411: When the ambient light brightness is low, the table light plug-in controls the table light to be turned on and controls the table light to be in a screen reading mode.

Optionally, when the ambient light brightness is less than or equal to preset brightness, the background logic unit in the table light plug-in may send a control message to the table light by using a first communication module, to request that the table light is turned on and is in the screen reading mode. After receiving the control message by using a second communication module, a table light service in the table light may turn on the table light and control the table light to be in the screen reading mode.

In this embodiment of this application, when the tablet computer is located near the table light, the current state of the table light may be detected. When the table light is turned off, the table light may be automatically controlled to be turned on and the table light may be controlled to be in the screen reading mode when the ambient light brightness is low. In this way, when needed light is replenished, screen reflection of the tablet computer is reduced, and the light is balanced, to effectively protect eyes and improving screen content browsing experience.

It should be noted that, in the foregoing embodiment in FIG. 10 and the embodiment in FIG. 14, the table light plug-in may automatically start the specified application. Alternatively, the user may manually start the specified application in the tablet computer. In this case, in some embodiments, in a running process, the specified application may further detect the ambient light brightness, and the table light may be controlled based on the ambient light brightness. Details are as follows.

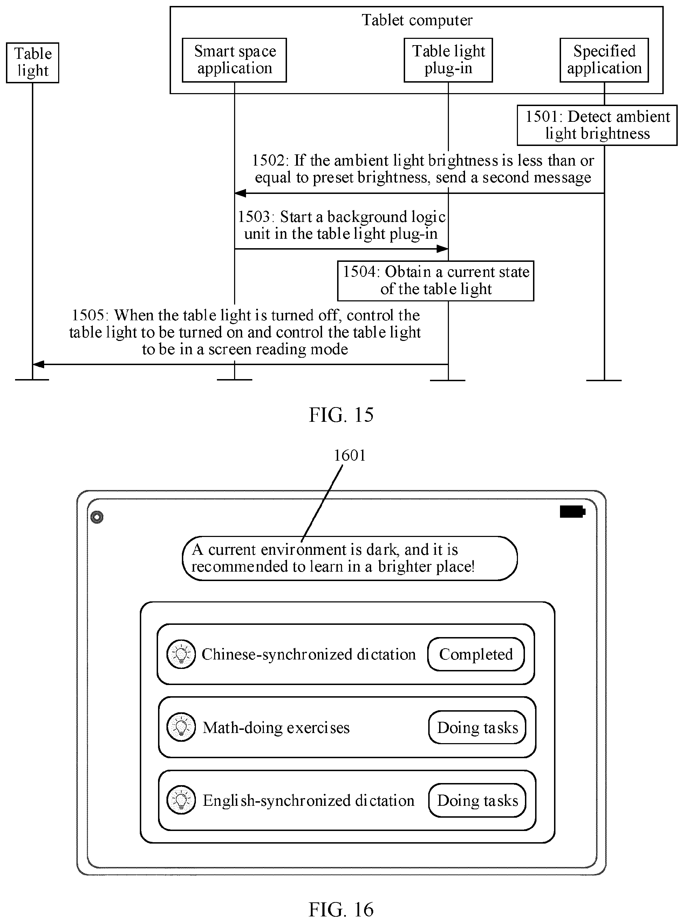

FIG. 15 is a schematic flowchart of a device control method according to an embodiment of this application. Refer to FIG. 15. The method includes the following steps.

Step 1501: A specified application detects ambient light brightness.

During running of the specified application, the ambient light brightness may be continuously detected. For example, the ambient light brightness may be periodically detected. Optionally, an ambient light sensor may be disposed in a tablet computer. The specified application may invoke the ambient light sensor to detect the ambient light brightness.

It should be noted that, in some cases, it is likely that a background program of a table light plug-in or a background program of a smart space application is manually closed by a user, or actively closed by the tablet computer. Therefore, in this embodiment of this application, during running of the specified application, the ambient light brightness may not be detected by the table light plug-in or the smart space application, but the ambient light brightness is detected by the specified application. In this way, it can be ensured that the ambient light brightness can be continuously obtained to perform a corresponding control process correspondingly.

If the ambient light brightness is greater than preset brightness, the specified application continues to monitor the ambient light brightness without performing another operation.

Step 1502: If the ambient light brightness is less than or equal to the preset brightness, the specified application sends a second message to the smart space application, where the second message is used for notifying the smart space application that current ambient light brightness is low.

In this case, the specified application may further perform a notification reminder to remind the user that a current environment is dark. For example, as shown in FIG. 16, the specified application may display a reminder message 1601 in an application interface of the specified application to remind the user that the current environment is dark.

Step 1503: The smart space application starts a background logic unit in the table light plug-in.

Optionally, the smart space application may start (also referred to as pull up) the background logic unit in the table light plug-in in a callback manner, and the second message may be carried in a start-up parameter of the background logic unit to indicate that the current ambient light brightness is low.

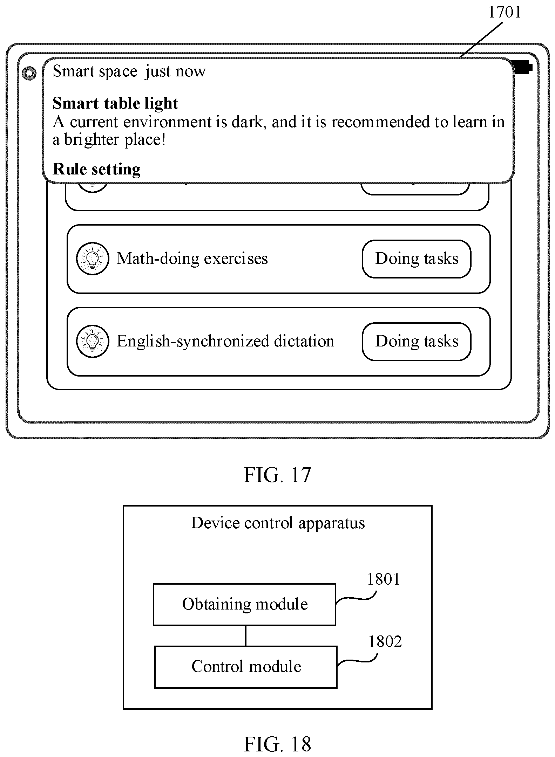

In this case, the table light plug-in may perform a notification reminder to remind the user that the current environment is dark. For example, as shown in FIG. 17, the table light plug-in may display a reminder message 1701 on a pull-down notification bar of the tablet computer to remind the user that the current environment is dark.

Step 1504: The table light plug-in obtains a current state of a table light.

Optionally, the background logic unit in the table light plug-in may send a state query message to the table light by using a first communication module, to request to query the current state of the table light. After receiving the state query message by using a second communication module, a table light service in the table light may send state information to the tablet computer by using the second communication module. The background logic unit in the table light plug-in may receive the state information by using the first communication module. The background logic unit in the table light plug-in determines the current state of the table light based on the state information.

Step 1505: When the table light is turned off, the table light plug-in controls the table light to be turned on and controls the table light to be in a screen reading mode.

Optionally, the background logic unit in the table light plug-in may send a control message to the table light by using the first communication module, to request that the table light is turned on and is in the screen reading mode. After receiving the control message by using the second communication module, the table light service in the table light may turn on the table light and adjust the table light to be in the screen reading mode.

In this embodiment of this application, the ambient light brightness may be continuously detected during running of the specified application in the tablet computer. When the ambient light brightness is low, a current state of a table light near the tablet computer may be detected. When the table light is turned off, the table light may be automatically controlled to be turned on and the table light may be controlled to be in the screen reading mode. In this way, when needed light is replenished, screen reflection of the tablet computer is reduced, and the light is balanced, to effectively protect eyes, and improve browsing experience when the user browses screen content of the tablet computer.

FIG. 18 is a schematic diagram of a structure of a device control apparatus according to an embodiment of this application. The apparatus may be implemented as a part or all of a computer device by using software, hardware, or a combination of the two. The computer device may be the electronic device in the embodiments in FIG. 1 to FIG. 2 above. Refer to FIG. 18. The apparatus includes: an obtaining module 1801 and a control module 1802.

The obtaining module 1801 is configured to: display an application interface of a specified application, and obtain a current state of the lighting device in response to an electronic device in an unlocked state entering a fence of a lighting device from outside the fence, or in response to an electronic device located within a fence of a lighting device changing from a screen-locked state to an unlocked state.

The control module 1802 is configured to: when the lighting device is turned on and is in a first lighting mode, control the lighting device to be switched from the first lighting mode to a second lighting mode matching the specified application. The first lighting mode and the second lighting mode have different lighting brightness distributions.

Optionally, brightness at a center position of a lighting region of the lighting device in the second lighting mode is lower than brightness at another position.

Optionally, the obtaining module 1801 is configured to:
if the specified application is not started, start the specified application to display the application interface of the specified application.

Optionally, the obtaining module 1801 is configured to:
if the specified application is already started and the specified application is in a background running state, switch the specified application to be in a foreground running state, to display the application interface of the specified application.

Optionally, the apparatus further includes:
a first detection module, configured to: when the lighting device is turned off, detect ambient light brightness; and
a control module 1802, configured to: if the detected ambient light brightness is less than or equal to preset brightness, control the lighting device to be turned on and control the lighting device to be in the second lighting mode.

Optionally, the apparatus further includes:
a first detection module, configured to detect the ambient light brightness in a process of running the specified application; and
a display module, configured to: if the detected ambient light brightness is less than or equal to the preset brightness, when it is determined that the electronic device is not located within the fence of the lighting device, display reminder information, where the reminder information is used for reminding to move to the lighting device.

Optionally, the apparatus further includes:
a receiving module, configured to receive a broadcast message, where the broadcast message carries a lighting device identifier.

The obtaining module 1801 is configured to:
if the electronic device changes from the screen-locked state to the unlocked state, detect whether the electronic device is located within a fence of a lighting device identified by a lighting device identifier in a latest received broadcast message; and
if the electronic device is located within the fence of the lighting device identified by the lighting device identifier in the latest received broadcast message, display the application interface of the specified application, and obtain the current state of the lighting device.

Optionally, the apparatus further includes:
a second detection module, configured to: if the electronic device changes from a mobile state to a stationary state, detect whether the electronic device is located within the fence of the lighting device identified by the lighting device identifier in the latest received broadcast message.

In this embodiment of this application, when the electronic device is located near the lighting device, the application interface of the specified application in the electronic device may be automatically displayed, so that a user is not interfered by another application. In addition, when the specified application is run and the lighting device is turned on, the lighting device may be automatically controlled to be in the second lighting mode, to reduce screen reflection of the electronic device and balance light, so as to effectively protect eyes and improve screen content browsing experience. When the specified application is run and the lighting device is turned off, the lighting device may be automatically controlled to be turned on and controlled to be in the second lighting mode when the ambient light brightness is low. In this way, when needed light is replenished, the screen reflection of the electronic device is reduced, and light is balanced, to effectively protect the eyes and improve the screen content browsing experience.

It should be noted that, when the device control apparatus provided in the foregoing embodiments controls the lighting device, division of the foregoing functional modules is merely used as an example for description. In practical application, the foregoing functions may be assigned to and completed by different functional modules as required. In other words, an internal structure of the apparatus may be divided into different functional modules to complete all or some of the functions described above.

The functional units and modules in the foregoing embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely intended to be easily distinguished from each other, and are not intended to limit the protection scope of embodiments of this application.

The device control apparatus provided in the foregoing embodiments belongs to a same conception as the device control method embodiments. For specific work processes and technical effects brought by the units and modules in the foregoing embodiments, refer to the method embodiments. Details are not described herein again.

All or some of the foregoing embodiments may be implemented by software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk drive, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

## Claims

1. A device control method, wherein the method comprises:
displaying, by the electronic device in response to an electronic device in an unlocked state entering a fence of a lighting device from outside the fence, or in response to an electronic device located within a fence of a lighting device changing from a screen-locked state to an unlocked state, an application interface of a specified application, and obtaining a current state of the lighting device; and
when the lighting device is turned on and is in a first lighting mode, controlling, by the electronic device, the lighting device to be switched from the first lighting mode to a second lighting mode matching the specified application, wherein
the first lighting mode and the second lighting mode have different lighting brightness distributions.

2. The method according to claim 1, wherein brightness at a center position of a lighting region of the lighting device in the second lighting mode is lower than brightness at another position.

3. The method according to claim 1 or 2, wherein the displaying, by the electronic device, an application interface of a specified application comprises:
if the specified application is not started, starting, by the electronic device, the specified application to display the application interface of the specified application.

4. The method according to claim 1 or 2, wherein the displaying, by the electronic device, an application interface of a specified application comprises:
if the specified application is already started and the specified application is in a background running state, switching, by the electronic device, the specified application to be in a foreground running state, to display the application interface of the specified application.

5. The method according to any one of claims 1 to 4, wherein after the displaying, by the electronic device, an application interface of a specified application, and obtaining a current state of the lighting device, the method further comprises:
when the lighting device is turned off, detecting, by the electronic device, ambient light brightness; and
if the detected ambient light brightness is less than or equal to preset brightness, controlling, by the electronic device, the lighting device to be turned on and controlling the lighting device to be in the second lighting mode.

6. The method according to any one of claims 1 to 5, wherein the method further comprises:
detecting, by the electronic device, the ambient light brightness in a process of running the specified application; and
if the detected ambient light brightness is less than or equal to the preset brightness, when determining that the electronic device is not located within the fence of the lighting device, displaying, by the electronic device, reminder information, wherein the reminder information is used for reminding to move to the lighting device.

7. The method according to any one of claims 1 to 6, wherein the method further comprises:
receiving, by the electronic device, a broadcast message, wherein the broadcast message carries a lighting device identifier; and
the displaying, by the electronic device in response to an electronic device located within a fence of a lighting device changing from a screen-locked state to an unlocked state, an application interface of a specified application, and obtaining a current state of the lighting device comprises:
if the electronic device changes from the screen-locked state to the unlocked state, detecting, by the electronic device, whether the electronic device is located within a fence of a lighting device identified by a lighting device identifier in a latest received broadcast message; and
if the electronic device is located within the fence of the lighting device identified by the lighting device identifier in the latest received broadcast message, displaying, by the electronic device, the application interface of the specified application, and obtaining the current state of the lighting device.

8. The method according to claim 7, wherein the method further comprises:
if the electronic device changes from a mobile state to a stationary state, detecting, by the electronic device, whether the electronic device is located within the fence of the lighting device identified by the lighting device identifier in the latest received broadcast message.

9. A computer device, wherein the computer device comprises a memory, a processor, and a computer program that is stored in the memory and that is executable on the processor, and when the computer program is executed by the processor, the method according to any one of claims 1 to 8 is implemented.

10. A computer-readable storage medium, wherein the computer-readable storage medium stores instructions, and when the instructions are run on a computer, the computer is enabled to perform the method according to any one of claims 1 to 8.
